# EUROPEAN PATENT APPLICATION

(11) **EP 4 131 518 A1**
(43) Date of publication of application: **08.02.2023**
(21) Application number: 21777068.4
(22) Date of filing: 15.03.2021
(51) Int. Cl.: H01M 4/86, H01M 4/90, H01M 4/92, C25B 9/23, C25B 11/04, H01M 8/10, C25B 9/00, C25B 11/03

(54) **ELECTRODE CATALYST LAYER FOR ELECTROCHEMICAL CELLS, MEMBRANE ELECTRODE ASSEMBLY FOR ELECTROCHEMICAL CELLS, AND ELECTROCHEMICAL CELL**

(30) Priority: 27.03.2020 JP 2020058987
(71) Applicant: Mitsui Mining & Smelting Co., Ltd., Shinagawa-ku Tokyo 141-8584 (JP)
(72) Inventor: KANEKO, Soma, Ageo-shi, Saitama 362-0021 (JP); UEHARA, Hiromitsu, Ageo-shi, Saitama 362-0021 (JP); ABE, Naohiko, Ageo-shi, Saitama 362-0021 (JP)
(74) Representative: Novagraaf Technologies
(86) International application number: PCT/JP2021/010457
(87) International publication number: WO 2021/193209

(57) **Abstract**

An electrode catalyst layer for electrochemical cells includes a first catalyst layer and a second catalyst layer. The first catalyst layer has a cell resistance measured at 80°C and 40% RH lower than that of the second catalyst layer. The electrode catalyst layer for electrochemical cells is used with the first catalyst layer being disposed on an electrolyte membrane side relative to the second catalyst layer. It is preferable that a first catalytically active component contained in the first catalyst layer and a second catalytically active component contained in the second catalyst layer each independently contain at least one element selected from the group consisting of platinum, palladium, ruthenium, and iridium.

## Description

### Technical Field

The present invention relates to an electrode catalyst layer for electrochemical cells, a membrane electrode assembly for electrochemical cells, and an electrochemical cell.

### Background Art

In electrochemical cells such as solid polymer fuel cells and water electrolysis apparatuses, a catalyst-supporting support in which a noble metal catalyst such as platinum is supported on a support is used in electrode catalyst layers. From the viewpoint of efficient use of the catalyst, a carbonaceous material that is a material with a large specific surface area is often used as the catalyst support.

In recent years, studies have been conducted on electrochemical cells that operate at a moderate temperature range of 100°C to 300°C for the purpose of enhancing the catalytic activity. However, in this temperature range or even in a temperature range around 80°C that is lower than the moderate temperature range, a support made of a carbonaceous material tends to be oxidized and disappear, which causes catalyst separation and electrolyte membrane degradation. As a means for enhancing the durability of a support made of a carbonaceous material, the use of a highly crystalline carbonaceous material has been studied. However, it cannot be said that the durability is sufficiently enhanced. Accordingly, the use of a support made of a metal oxide instead of a support made of a carbonaceous material is studied.

In an electrochemical cell as described above, an electrode reaction takes place at a three-phase interface, and water is generated within a catalyst layer. The generated water dissipates from the catalyst layer, but in some cases, the generated water accumulates within the catalyst layer. When the water accumulates too much, the catalyst layer can no longer absorb the water, and a so-called flooding phenomenon occurs. Patent Literatures 1 and 2 propose methods for preventing the flooding phenomenon.

### Citation List

### Patent Literature

Patent Literature 1: JP 2004-171847A
Patent Literature 2: US 2017/141407A1

### Summary of Invention

The above-described support made of a metal oxide has a higher polarity than the support made of a carbonaceous material. Accordingly, in an extreme environment such as a high humidity state in which a flooding phenomenon takes place, or conversely, a low humidity state, electrode reactions do not smoothly proceed. As described above, techniques for improving electrode reactions in a high humidity state have conventionally been proposed, but there has been no proposal of techniques for improving electrode reactions in both a low humidity state and a high humidity state.

Accordingly, it is an object of the present invention to provide an electrode catalyst layer for electrochemical cells that has durability and can cause electrochemical reactions to smoothly proceed in both a low humidity state and a high humidity state.

The present invention provides an electrode catalyst layer for electrochemical cells, the electrode catalyst layer including: a first catalyst layer that contains a first catalyst-supporting support in which a first catalytically active component is supported on a support, the support containing a first metal oxide; and a second catalyst layer that contains a second catalyst-supporting support in which a second catalytically active component is supported on a support, the support containing a second metal oxide, wherein the first catalyst layer has a cell resistance measured at 80°C and 40% RH using a current-interrupt method lower than that of the second catalyst layer, and the electrode catalyst layer is used with the first catalyst layer being disposed on an electrolyte membrane side relative to the second catalyst layer.

The present invention provides an electrode catalyst layer for electrochemical cells, the electrode catalyst layer including: a first catalyst layer that contains a first catalyst-supporting support in which a first catalytically active component is supported on a support, the support containing a first metal oxide; and a second catalyst layer that contains a second catalyst-supporting support in which a second catalytically active component is supported on a support, the support containing a second metal oxide, wherein the first catalyst-supporting support has a cumulative volume particle size D₅₀ at 50% cumulative volume obtained using a laser diffraction scattering particle size distribution measurement method larger than that of the second catalyst-supporting support, in a pore size distribution measured based on a mercury intrusion method of the first catalyst layer, a peak is observed in a range of 0.005 µm or more and less than 0.1 µm, and also in a range of 0.1 µm or more and 1 µm or less, in a pore size distribution measured based on a mercury intrusion method of the second catalyst layer, at least one peak is observed in a range of 0.005 µm or more and 0.1 µm or less, and the electrode catalyst layer is used with the first catalyst layer being disposed on an electrolyte membrane side relative to the second catalyst layer.

### Description of Embodiment

Hereinafter, the present invention will be described based on a preferred embodiment thereof. The present invention relates to an electrode catalyst layer for electrochemical cells. The electrode catalyst layer includes at least two layers: a first catalyst layer and a second catalyst layer. The first catalyst layer and the second catalyst layer are preferably in direct contact with each other. In this case, no additional catalyst layer or no additional layer other than the catalyst layers is intentionally formed between the two catalyst layers. In the description given below, the term "electrode catalyst layer" is used as a collective term for the first catalyst layer and the second catalyst layer.

In the case where the electrode catalyst layer of the present invention is incorporated into an electrochemical cell, the electrode catalyst layer is used with the first catalyst layer of the electrode catalyst layer being disposed on an electrolyte membrane side relative to the second catalyst layer of the electrode catalyst layer. For example, the first catalyst layer is disposed in direct contact with the electrolyte membrane. In this case, it is preferable that no additional catalyst layer or no additional layer other than the catalyst layers is intentionally formed between the first catalyst layer and the electrolyte membrane. However, where necessary, an additional catalyst layer or an additional layer other than the catalyst layers may be disposed between the first catalyst layer and the electrolyte membrane.

The second catalyst layer may be used by being disposed in direct contact with a gas diffusion layer, and an additional layer such as a microporous layer may be provided between the second catalyst layer and the gas diffusion layer.

The first catalyst layer includes a first catalyst-supporting support in which a first catalytically active component is supported on a support that contains a first metal oxide. On the other hand, the second catalyst layer includes a second catalyst-supporting support in which a second catalytically active component is supported on a support that contains a second metal oxide. The first catalyst layer and the second catalyst layer may be distinguished from each other by, for example, the particle size of the catalyst-supporting support (for example, cumulative volume particle size D₅₀). Alternatively, the first catalyst layer and the second catalyst layer may be distinguished from each other by the type of catalytically active component or the type of support. Alternatively, the first catalyst layer and the second catalyst layer may be distinguished from each other by the values of physical properties such as, for example, cell resistance.

In the present invention, different functions are assigned to the first catalyst layer and the second catalyst layer that constitute the electrode catalyst layer. To describe in detail, the first catalyst layer has a function of suppressing a reduction in electrochemical reactions even when the electrode catalyst layer is in a low humidity state.

On the other hand, the second catalyst layer has a function of suppressing a reduction in electrochemical reactions even when the electrode catalyst layer is in a high humidity state. As a result, in the electrode catalyst layer of the present invention, it is possible to cause electrochemical reactions to smoothly proceed in both a low humidity state and a high humidity state.

Also, in the present invention, a metal oxide is used as a support for a catalytically active component, and thus the durability in power generation is high.

The term "low humidity state" as used in the present invention refers to a state in which the humidity in the electrode catalyst layer is approximately 40% RH or less. On the other hand, the term "high humidity state" refers to a state in which the humidity in the electrode catalyst layer is approximately 90% RH or more.

It is known that the proton mobility in the electrolyte membrane and the ionomer is affected by whether the humidity in the electrode catalyst layer is high or low, and as a result of the proton mobility being affected, electrochemical reactions are also affected. In particular, in a low humidity state, the proton mobility is likely to be low. The inventors of the present application conducted in-depth studies to suppress a reduction in the proton mobility in the electrode catalyst layer in a low humidity state, and found that it is effective to configure a first catalyst layer and a second catalyst layer such that the first catalyst layer has a cell resistance lower than that of the second catalyst layer.

There are various factors that constitute cell resistance such as electrolyte membrane resistance, the electric resistance of constituent members, and contact resistance, but the main factor is proton mobility. Accordingly, in the present invention, cell resistance is used as an indicator for proton mobility, and the cell resistance of each catalyst layer is adjusted so as to cause electrochemical reactions to smoothly proceed in both a low humidity state and a high humidity state.

From the viewpoint of causing electrochemical reactions to more smoothly proceed in both a low humidity state and a high humidity state, cell resistance R₁ of the first catalyst layer at 80°C and 40% RH is preferably 50% or more and less than 100%, more preferably 70% or more and 95% or less, and even more preferably 80% or more and 92% or less of cell resistance R₂ of the second catalyst layer at 80°C and 40% RH.

The cell resistance of the first catalyst layer and the second catalyst layer is measured in a low humidity state at 80°C and 40% RH. A current-interrupt method is used to measure the cell resistance. The cell resistance is measured using, as a measurement target, a unit cell produced using a first catalyst layer or a second catalyst layer as a cathode electrode catalyst and using platinum on carbon as an anode electrode catalyst. The method for measuring cell resistance will be described in detail in Examples, which will be described later.

As described above, the cell resistance of the first catalyst layer in a low humidity state at 80°C and 40% RH is preferably lower than that of the second catalyst layer, and it is advantageous that the cell resistance of the first catalyst layer is lower than that of the second catalyst layer even in a high humidity state at 80°C and 90% RH from the viewpoint of causing electrochemical reactions to more smoothly proceed in both a low humidity state and a high humidity state. In particular, the cell resistance R₁ of the first catalyst layer at 80°C and 90% RH is preferably 50% or more and less than 100%, more preferably 70% or more and 95% or less, and even more preferably 80% or more and 92% or less of the cell resistance R₂ of the second catalyst layer at 80°C and 90% RH.

Hereinafter, the first catalyst layer and the second catalyst layer that constitute the electrode catalyst layer of the present invention will be described.

The first catalyst layer contains a first catalyst-supporting support. In the first catalyst-supporting support, a first catalytically active component is supported on a support that contains a first metal oxide.

As the first metal oxide, a conductive metal oxide is preferably used. Also, it is preferable to use, as the first metal oxide, a metal oxide in which the metals that constitute the first metal oxide are unlikely to melt while the electrochemical cell is in operation.

The first metal oxide preferably has a volume resistivity of, for example, 100 kQcm or less. The volume resistivity is measured using, for example, a powder compact resistance measurement system (PD-51 available from Mitsubishi Chemical Analytech Co., Ltd.) and a resistivity measurement instrument (MCP-T610 available from Mitsubishi Chemical Analytech Co., Ltd.). Specifically, a 1 g sample is placed in a probe cylinder, and a probe unit is set in the powder compact resistance measurement system PD-51. A load of 18 kN is applied using a hydraulic jack to produce a cylindrical pellet with a diameter of 20 mm. The resistance value of the obtained pellet is measured using the resistivity measurement instrument MCP-T610.

The first metal oxide is, for example, one or more selected from an indium oxide, a tin oxide, a titanium oxide, a zirconium oxide, a cerium oxide, a molybdenum oxide, a tungsten oxide, a zinc oxide, a vanadium oxide, a tantalum oxide, a niobium oxide, and a rhenium oxide. In particular, it is preferable that the first metal oxide is a tin oxide, a titanium oxide, or a zirconium oxide because they have excellent acid resistance. As a more preferable inorganic oxide, for example, a tin oxide that contains one or more elements of indium, niobium, tantalum, antimony, and tungsten can be used. A tin oxide that contains a halogen element may also be used. Specific examples include: metal- or nonmetal-containing (doped) tin oxides such as an indium-containing tin oxide, an antimony-containing tin oxide, a fluorine-containing tin oxide, a fluorine tungsten-containing tin oxide, a tantalum-containing tin oxide, a tantalum antimony-containing tin oxide, a tungsten-containing tin oxide, and a niobium-containing tin oxide.

As a support made of a tin oxide, specifically, any of those disclosed in WO 2016/98399 and WO 2020/31479 can be used. The content of these publications is incorporated herein as a part of the Description of the present application.

The first metal oxide preferably has a primary particle size of 10 nm or more and 100 nm or less, particularly 10 nm or more and 50 nm or less, and more particularly 12 nm or more and 50 nm or less from the viewpoint of increasing the specific surface area of the support and supporting the catalyst with high dispersivity. The particle size of the first metal oxide is determined by observing the particles of the metal oxide using an electron microscope, measuring the maximum transverse length for 500 or more particles, and calculating the average value of the measured values. The observation magnification is set to 100,000 times, and measurement is performed using, as a measurement target, an object confirmed as a minimum unit of a particle based on the external geometric configuration observed at the above observation magnification.

As the first catalytically active component supported on the support made of the first metal oxide, the same materials as those conventionally used in the technical field to which the present invention pertains can be used. For example, various types of noble metals can be used as the first catalytically active component. In particular, it is preferable to use, as the first catalytically active component, at least one element selected from the group consisting of platinum, palladium, ruthenium, osmium, and iridium because they have high catalytic activity. It is more preferable to use platinum.

In the case where platinum is used as the first catalytically active component, elemental platinum or a platinum alloy can be used. Examples of the platinum alloy include an alloy made using platinum and a noble metal other than platinum, and an alloy made using platinum and a transition metal. Examples of noble metals other than platinum include palladium, ruthenium, rhodium, osmium, and iridium. Examples of transition metals include nickel, cobalt, iron, manganese, chromium, molybdenum, lanthanum, cerium, gadolinium, copper, and titanium.

In the case where platinum is used as the first catalytically active component, it is particularly preferable to use elemental platinum because the catalytic activity is high even when the electrode catalyst layer is in a low humidity state.

It is preferable that the first catalytically active component has an average particle size of 1 nm or more and 10 nm or less on the support surface, from the viewpoint of efficiently exhibiting the catalytic activity. The particle size of the catalyst can be measured in the same manner as the method for measuring the particle size of the first metal oxide. The observation magnification is set to 500,000 times.

The first catalyst-supporting support has a cumulative volume particle size D₅₀ at 50% cumulative volume obtained using a laser diffraction scattering particle size distribution measurement method of preferably 0.1 µm or more and 8 µm or less, more preferably 0.2 µm or more and 5 µm or less, and even more preferably 0.3 µm or more and 3 µm or less.

The first catalyst-supporting support may be used in powder form, or may be granulated. As the granulation method, a spray drying method, an extrusion granulation method, a tumbling granulation method, or the like can be used.

The cumulative volume particle size D₅₀ described above can be measured with a laser diffraction scattering particle size distribution apparatus using, for example, a liquid obtained by diluting a liquid dispersion with ethanol, the liquid dispersion obtained by dispersing a catalyst layer-forming composition that contains a catalyst-supporting support and an ionomer such as Nafion (registered trademark), which will be described later. Alternatively, instead of using the measurement method that uses a liquid dispersion, the cumulative volume particle size D₅₀ may be measured by stripping off a catalyst from a Teflon (registered trademark) sheet or a catalyst layer coated electrolyte membrane (hereinafter also referred to as "CCM") to which the catalyst has been applied, and dispersing the stripped catalyst-supporting support in ethanol.

Particularly when the first catalyst-supporting support is used in granulated form, the following advantageous effects can be obtained: the amount of water present in the first catalyst layer can be easily controlled; and the proton mobility is unlikely to be low even when the electrode catalyst layer is in a low humidity state. From this viewpoint, the cumulative volume particle size D₅₀ of the first catalyst-supporting support in granulated form is preferably within the above-described range.

Next, a description of the second catalyst layer will be given. The second catalyst layer contains a second catalyst-supporting support. In the second catalyst-supporting support, a second catalytically active component is supported on a support that contains a second metal oxide.

As the second metal oxide, a conductive metal oxide is preferably used. Also, it is preferable to use, as the second metal oxide, a metal oxide in which the metals that constitute the second metal oxide is unlikely to melt while the electrochemical cell is in operation. Specifically, as the second metal oxide, oxides that are the same as or different from those listed as examples of the first metal oxide can be used. For example, the first metal oxide and the second metal oxide may each independently be a tin oxide, a titanium oxide, or a zirconium oxide.

As the second catalytically active component supported on the support made of the second metal oxide, the same materials as those conventionally used in the technical field to which the present invention pertains can be used. For example, various types of noble metals can be used as the second catalytically active component. Specifically, as the second catalytically active component, catalytically active components that are the same as or different from those listed as examples of the first catalytically active component can be used. To describe in detail, it is preferable that the first catalytically active component and the second catalytically active component each independently contain at least one element selected from the group consisting of platinum, palladium, ruthenium, osmium, and iridium.

In particular, it is preferable to use a platinum-transition metal alloy as the second catalytically active component because this makes it easy to adjust the cell resistance of the first catalyst layer to be lower than that of the second catalyst layer. The use of a platinum-transition metal alloy is also preferable in view of its high catalytic activity. The platinum transition-metal alloy is a preferable material because it has a catalytic activity higher than that of elemental platinum, but, on the other hand, a reduction in catalytic activity may be observed in a low humidity state. However, by disposing a platinum-transition metal alloy in the second catalyst layer, or in other words, on a side relatively far from the electrolyte membrane, water is smoothly supplied from the first catalyst layer (in short, the proton mobility does not decrease), and thus a reduction in catalytic activity is unlikely to occur.

From the viewpoint of maximizing the catalytic activity, the ratio of platinum and transition metal in the platinum-transition metal alloy is preferably set such that the amount of transition metal is 20 mol% or more and 40 mol% or less relative to 100 mol% of platinum.

A preferred particle size of the second catalyst-supporting support is the same as that in the case of the first catalyst layer. The second catalyst-supporting support may be used in powder form or in granulated form.

In order to adjust the cell resistance of the first catalyst layer to be lower than that of the second catalyst layer, for example, one or a combination of two or more of the following methods may be used: (i) a method in which a catalytically active component that is different from the first catalytically active component is used as the second catalytically active component; (ii) a method in which the particle size of the first catalyst-supporting support is configured to be larger than that of the second catalyst-supporting support; (iii) a method in which the pore size distributions of the first catalyst layer and the second catalyst layer are adjusted; and (iv) a method in which the amount of ionomer contained in the first catalyst layer is set to be different from the amount of ionomer contained in the second catalyst layer.

In the case of the method (i), it is preferable to use, for example, elemental platinum as the first catalytically active component, and use a platinum-transition metal alloy as the second catalytically active component.

In the case of the method (ii), it is advantageous that the first catalyst-supporting support has a cumulative volume particle size D₅₀ at 50% cumulative volume obtained using a laser diffraction scattering particle size distribution measurement method larger than that of the second catalyst-supporting support.

In the case of the method (iii), it is advantageous that, in a pore size distribution of the first catalyst layer measured based on a mercury intrusion method, a peak is observed in a range of 0.005 µm or more and less than 0.1 µm, and also in a range of 0. 1 µm or more and 1 µm or less, and, in a pore size distribution of the second catalyst layer measured based on a mercury intrusion method, at least one peak is observed in a range of 0.005 µm or more and 0.1 µm or less.

For the purpose of the methods (ii) and (iii), it is preferable to use the first catalyst-supporting support in granulated form and use the second catalyst-supporting support in powder form.

In the case of the method (iv), it is preferable that the amount of ionomer contained in the first catalyst layer is larger than the amount of ionomer contained in the second catalyst layer.

The methods (i) to (iv) described above are applicable to both cases where the same metal oxide is used as the first metal oxide and the second metal oxide, and where different metal oxides are used as the first metal oxide and the second metal oxide, but are particularly effective when the same metal oxide is used as the first metal oxide and the second metal oxide, and even more particularly effective when a tin oxide is used as the first metal oxide and the second metal oxide.

The first catalyst layer and the second catalyst layer may contain additional components in addition to the catalyst-supporting support. The first catalyst layer and/or the second catalyst layer may contain, for example, an ionomer. The ionomer is preferably proton conductive. As a result of an ionomer being contained in the first catalyst layer and/or the second catalyst layer, the performance of these catalyst layers is further improved. As the ionomer, it is possible to use, for example, a polymer material that has a structure in which a perfluoroether pendant side chain with a sulfonic acid group at the terminal is linked to a polytetrafluoroethylene main chain. Examples of the ionomer include Nafion (registered trademark), Flemion (registered trademark), Aciplex (registered trademark), Fumion F (registered trademark), and the like.

In the case where an ionomer is contained in the first catalyst layer and/or the second catalyst layer, it is advantageous to adjust the amount of ionomer and the amount of support from the viewpoint of adjusting the cell resistance of the first catalyst layer to be lower than that of the second catalyst layer. For example, from the viewpoint of coating the catalytically active component and the catalyst-supporting support contained in the first catalyst layer and/or the second catalyst layer with an ionomer so as to easily respond to changes in humidity, the value of I/M, which is the ratio of mass I of ionomer relative to mass M of support in the first catalyst layer or the second catalyst layer, is each independently preferably 0.06 or more, and more preferably 0.07 or more. On the other hand, from the viewpoint of suppressing an increase in the cell resistance caused by the ratio of ionomer present being increased, the value of I/M is preferably 0.25 or less, more preferably 0.22 or less, and even more preferably 0.20 or less. An ionomer is often provided in the form of a liquid dispersion, but the term "mass I of ionomer" used above refers to the mass of solids in the liquid dispersion.

The first catalyst layer has a thickness t₁ of preferably 0.2 µm or more and 10 µm or less. By setting the thickness t₁ of the first catalyst layer within this range, it is possible to not only reduce the resistance of the catalyst layer even in a low humidity state, but also favorably prevent the flooding phenomenon in a high humidity state. From this viewpoint, the thickness t₁ of the first catalyst layer is more preferably 0.5 µm or more and 7.5 µm or less, and even more preferably 1 µm or more and 5 µm or less.

On the other hand, the second catalyst layer has a thickness t₂ of preferably 0.5 µm or more and 15 µm or less. By setting the thickness t₂ of the second catalyst layer within this range, it is possible to prevent the flooding phenomenon in a high humidity state and obtain a favorable catalytic activity. Accordingly, it is preferable to set the thickness t₂ within this range From this viewpoint, the thickness t₂ of the second catalyst layer is more preferably 2 µm or more and 10 µm or less, and even more preferably 2 µm or more and 8 µm or less.

The relative relationship between the thickness t₁ of the first catalyst layer and the thickness t₂ of the second catalyst layer is related to smooth progress of electrochemical reactions in a low humidity state and electrochemical reactions in a high humidity state. From this viewpoint, the value of t₁/t₂, which is the ratio of the thickness t₁ of the first catalyst layer relative to the thickness t₂ of the second catalyst layer, is set to preferably 0.05 or more and 2 or less, more preferably 0.1 or more and 1.5 or less, even more preferably 0.2 or more and 1 or less, and yet even more preferably 0.4 or more and 0.9 or less.

The thickness of each of the first catalyst layer and the second catalyst layer is measured in the manner described below. A first catalyst layer and a second catalyst layer are sequentially formed on a solid electrolyte membrane, and a cross section of the catalyst layers is imaged and observed using a scanning electron microscope at a magnification of, for example, 5,000 times. In an observation field of view of the captured image, the thickness of each of the first catalyst layer and the second catalyst layer is measured at 20 points that are spaced apart at arbitrary intervals. Next, cross-sectional images two observation fields of view are captured at positions different from that at which the previous image was captured, and the thickness of each of the first catalyst layer and the second catalyst layer is measured at 20 points in the same manner as described above, and then the average value is calculated. Finally, the thickness of each of the first catalyst layer and the second catalyst layer is obtained by arithmetically averaging the thickness values measured at 60 points in each of the first catalyst layer and the second catalyst layer when the three images are observed.

In order to adjust the cell resistance of the first catalyst layer to be lower than that of the second catalyst layer, it is also advantageous to adjust the pore size distributions of these catalyst layers. To describe in detail, in the case of the first catalyst layer, it is preferable that at least one peak is observed in a range of 0.005 µm or more and less than 0.1 µm in a pore size distribution measured based on a mercury intrusion method. It is more preferable that a single peak is observed in this pore size range.

In the first catalyst layer, it is preferable that at least one peak is also observed in a range of 0.1 µm or more and 1 µm or less, in addition to the above-described range. It is more preferable that a single peak is observed in this pore size range.

In order to cause a peak to appear in each of the above-described ranges in the pore size distribution of the first catalyst layer, it is advantageous that, for example, the first metal oxide that constitutes the first catalyst-supporting support has a particle size of 10 nm or more and 100 nm or less, and the first catalyst-supporting support is used in granulated form. A peak within a range of 0.005 µm or more and less than 0.1 µm described above mainly corresponds to the pores between primary particles of the first catalyst-supporting support. A peak within a range of 0.1 µm or more and 1 µm or less mainly corresponds to the pores between granules.

On the other hand, in the case of the second catalyst layer, it is preferable that at least one peak is observed in a range of 0.005 µm or more and 0.1 µm or less in a pore size distribution measured based on a mercury intrusion method, and it is more preferable that a single peak is observed in this range.

In order to cause a single peak to appear in the above-described range in the pore size distribution of the second catalyst layer, it is advantageous that, for example, the second metal oxide that constitutes the second catalyst-supporting support has a particle size of 10 nm or more and 100 nm or less, and the second catalyst-supporting support is used in powder form (in short, used without being granulated).

A pore size distribution based on a mercury intrusion method is obtained using, for example, Auto Pore IV Model 9520 available from Shimadzu Corporation. To describe in detail, a measurement sample is placed in a cell, continuously pressurized from 0 psi to 60000 psi (413700 kPa) to estimate the amount of mercury intruded into the pores of the sample from the electrostatic capacity, and obtain the relationship between pore size and pore volume.

The electrode catalyst layer of the present invention can be used as a CCM in an electrochemical cell. A CCM includes a solid electrolyte membrane and an electrode catalyst layer that is disposed on a surface of the solid electrolyte membrane. In the electrode catalyst layer included in the CCM, the first catalyst layer is disposed on the solid electrolyte membrane side relative to the second catalyst layer.

Examples of the solid electrolyte membrane include a perfluorosulfonic acid polymer-based proton conductive membrane, a membrane obtained by doping an inorganic acid such as phosphoric acid into a hydrocarbon-based polymer compound, a membrane made of an organic/inorganic hybrid polymer, a portion of which is substituted with a proton conductive functional group, a membrane made of a proton conductor obtained by impregnating a polymer matrix with a phosphoric acid solution or a sulfuric acid solution, and the like.

In order to obtain a CCM by forming an electrode catalyst layer that includes a first catalyst layer and a second catalyst layer on a surface of a solid electrolyte membrane, first, a liquid dispersion that contains a first catalyst-supporting support is prepared, and the liquid dispersion is applied onto one surface of a release sheet to form a coating film that serves as a first catalyst layer. Next, the surface of the release sheet to which the liquid dispersion has been applied is superimposed on a solid electrolyte membrane, and then heat pressed in this state to transfer the first catalyst layer onto the solid electrolyte membrane. Next, a liquid dispersion that contains a second catalyst-supporting support is applied onto one surface of a release sheet to form a coating film that serves as a second catalyst layer. Then, the surface of the release sheet to which the liquid dispersion has been applied is superimposed on the surface of the solid electrolyte membrane on which the first catalyst layer has been formed, and then heat pressed in this state to transfer the second catalyst layer onto the first catalyst layer. In this way, a CCM is obtained.

It is preferable to use a primary alcohol as a liquid medium used to prepare the liquid dispersions that contain the catalyst-supporting supports. Examples of the primary alcohol include primary alcohols with 1 or more and 10 or less carbon atoms. Among these, it is preferable to use a saturated aliphatic alcohol. Examples include methanol, ethanol, propanol, butanol, pentanol, hexanol, heptanol, octanol, nonanol, decanol, and the like. In particular, it is preferable to use saturated aliphatic alcohols with 1 or more and 4 or less carbon atoms. The primary alcohols may be used alone or in a combination of two or more. It is also possible to use solvents other than the above-described primary alcohols. Examples of other solvents include water and organic solvents including aliphatic monohydric alcohols such as 2-propanol, aromatic hydrocarbons such as toluene and benzene, aliphatic hydrocarbons such as hexane, as well as ketones, esters, and ethers.

The electrode catalyst layer of the present invention may also be used as a membrane electrode assembly (hereinafter also referred to as "MEA"). An MEA includes a solid electrolyte membrane, an electrode catalyst layer that is disposed on a surface of the solid electrolyte membrane, and a gas diffusion layer that is disposed on a surface of the electrode catalyst layer. In the electrode catalyst layer of the MEA, the first catalyst layer is disposed on the solid electrolyte membrane side relative to the second catalyst layer.

As the gas diffusion layer, for example, a porous material such as carbon paper or a carbon cloth can be used. Specifically, the gas diffusion layer can be formed, for example, using a carbon cloth obtained by weaving a thread composed of a carbon fiber whose surface is coated with polytetrafluoroethylene and a carbon fiber without the coating at a predetermined ratio.

An electrochemical cell can be assembled using the above-described MEA. In the case where the electrochemical cell is a battery such as, for example, a fuel cell or a metal-air battery, the electrode catalyst layer of the present invention is preferably used as the cathode. In the case where the electrochemical cell is a water electrolysis apparatus, the electrode catalyst layer of the present invention is preferably used as the anode. These configurations are preferable in terms of enabling electrochemical reactions to smoothly proceed in both a low humidity state and a high humidity state.

### Examples

Hereinafter, the present invention will be described in further detail based on examples. However, the scope of the present invention is not limited to the examples given below. Unless otherwise stated, the percent sign "%" used herein means "mass%".

### Example 1

### (1) Production of First Metal Oxide

An aqueous alkaline solution was prepared by dissolving 5.47 g of sodium hydroxide and 0.56 g of Na₂WO₄•2H₂O in 495 g of pure water. The obtained solution is referred to as "solution A". Separately, an aqueous tin solution was obtained by dissolving 11.55 g of stannous fluoride in 489 g of pure water in a beaker. The obtained solution is referred to as "solution B". The entire amount of the solution A prepared first was transferred into the solution B at room temperature (25°C) under stirring the solution B using a paddle blade. After the addition of the solution A, the mixture was aged at room temperature for 5 minutes under stirring. After that, decantation washing was performed using pure water until the conductivity reached 100 µS/cm or less, and a precursor slurry was thereby obtained.

Pure water was added to the obtained slurry to adjust the concentration to 1%, and 200 g of the slurry was weighed out and taken out. Then, 1.07 g of a 30% hydrogen peroxide solution was added to the slurry, followed by aging at room temperature for 5 minutes under stirring.

A hydrothermal synthesis was performed using an apparatus shown in Fig. 1 of WO 2016/98399. The temperature of the reactor 10 shown in the diagram (Fig. 1) was set to 600°C. Also, the pressure in the reactor 10 was set to 25 MPa. The temperature and pressure conditions correspond to supercritical conditions of water. Also, the reaction time was adjusted to 5 minutes by adjusting the length of the pipe from the mixer 8 to the outlet of the reactor 10 shown in the diagram and the pump flow rate. In this way, tin oxide particles containing fluorine and tungsten were obtained. The tin oxide particles were used as a first metal oxide. As a result of observation using an electron microscope, it was found that the primary particle size of the tin oxide particles was 15 nm.

### (2) Granulation of First Metal Oxide

The first metal oxide obtained in the step (1) was granulated using a spray drying granulation method. The spray dryer was operated under the following conditions.
- Slurry concentration: 40 g/L
- Slurry supply rate: 3.3 mL/min
- Inlet temperature: 220°C

The cumulative volume particle size D₅₀ of the obtained granules was 2.45 µm.

### (3) Production of First Catalyst-Supporting Support

5 mL of H₂PtCl₆ solution (corresponding to 1g of Pt) was dissolved in 295 mL of distilled water, 15.3 g of NaHSOs was added, and then diluted with 1400 mL of distilled water. A 35% hydrogen peroxide solution (120 mL) was added dropwise while adjusting the pH to about 5 by adding a 5% NaOH aqueous solution, and a liquid containing colloidal platinum was obtained. At this time, the 5% NaOH aqueous solution was added as appropriate to maintain the pH of the liquid to about 5. Then, 5.67 g of the tin oxide particles obtained in the step (2) was added to the liquid, and mixed at 90°C for 3 hours. After that, the liquid was cooled and subjected to solid/liquid separation. In order to remove chloride ions from a wet powder obtained through the solid/liquid separation, the powder was again diluted with 1500 mL of distilled water and then boiled at 90°C for 1 hour, and the liquid was cooled and subjected to solid/liquid separation. This washing operation was performed four times. Finally, after the solid/liquid separation, the powder was dried in the atmosphere at 60°C for 12 hours. In this way, platinum containing a non-stoichiometric platinum oxide was supported on the surface of the tin oxide particles. Next, the tin oxide particles were subjected to heat treatment in a 4 vol% H₂/N₂ atmosphere at 80°C for 2 hours so as to reduce platinum. The amount of supported platinum measured using ICP emission spectrometry was 14% of the amount of the tin oxide particles supporting platinum. In this way, a first catalyst-supporting support was obtained.

### (4) Formation of First Catalyst Layer

1.46 g of the first catalyst-supporting support in granulated form was placed in a container, and pure water, ethanol, and 2-propanol were sequentially added at a mass ratio of 35:45:20 (3.06 g as a mixed solution). The thus-obtained liquid dispersion was subjected to dispersion using ultrasonic waves for 3 minutes. Next, yttrium-stabilized zirconia balls with a diameter of 10 mm were placed in the container, and stirring was performed at 800 rpm for 20 minutes using a planetary ball mill (ARE 310 available from Thinky Corporation). Furthermore, 5% Nafion (registered trademark) (274704-100MI, available from Sigma-Aldrich) was added to the liquid dispersion, and stirring was performed in the same manner as described above using the ultrasonic dispersion and the planetary ball mill. The amount of Nafion added was adjusted such that the mass ratio of Nafion relative to the first support was 0.074.

The thus-obtained liquid dispersion was applied onto a polytetrafluoroethylene sheet using a bar coater, and the formed coating film was dried at 60°C.

### (5) Production of Second Metal Oxide

A second metal oxide was produced in the same manner as the first metal oxide.

### (6) Production of Second Catalyst-Supporting Support

337 mL of N,N-dimethylformamide (hereinafter also referred to as "DMF", 049-32363 available from FUJIFILM Wako Pure Chemical Corporation) was placed in a 500-mL measuring flask, and the following components were also added at the concentrations shown below.
- Bis(acetylacetonato)platinum (II) (Pt(acac)₂, 028-16853 available from FUJIFII,M Wako Pure Chemical Corporation): 9.87 × 10⁻³ mol/L_{-DMF}
- Bis(2,4-pentanedionato)nickel (II)•dihydrate (Ni(acac)₂•2H₂O, 343-01981 available from Dojindo Laboratories): 3.62 × 10⁻³ mol/L_{-DMF}
- Benzoic acid (204-00985 available from FUJIFII,M Wako Pure Chemical Corporation): 2.49 × 10⁻¹ mol/L_{-DMF}
- Second metal oxide obtained in the step (5): 7.49 g/L_{-DMF}

A liquid mixture of the above-described components was subjected to dispersion at room temperature for 30 minutes using an ultrasonic disperser to obtain a liquid dispersion. Preliminary stirring was performed at room temperature at 400 rpm for 20 hours using a rugby ball-shaped stirrer with a major diameter of about 2 cm and a minor diameter of about 1 cm while the measuring flask containing the liquid dispersion was purged with argon gas.

Next, the measuring flask containing the liquid dispersion that had undergone the preliminary stirring was immersed in an oil bath with an oil temperature controlled at 160°C while maintaining the argon gas purged state, so as to heat the liquid dispersion. At this time, the time required for the solvent in the measuring flask to boil was about 7 minutes. After the solvent was boiled, the measuring flask was heated to reflux for 12 hours, with the oil temperature in the oil bath being controlled at 160°C. After that, the measuring flask was removed from the oil bath and cooled to room temperature, and filtration was performed to obtain a solid.

The obtained solid was washed five times using a mixed solvent of acetone and ethanol (at a volume ratio of 1:1), then washed once using a mixed solvent of water and ethanol (at a volume ratio of 1:1), and thereafter dried. The obtained dry powder was dispersed in 400 mL of 0.5 mol/L perchloric acid, the dispersion was heated and stirred at 60°C for 2 hours and thereafter filtrated, and the residue was washed, and dried. Through this, a second catalyst-supporting support in which a platinum-nickel alloy was supported on a support was obtained.

The amount of supported platinum-nickel alloy in the second catalyst-supporting support was as follows: platinum was 20% and nickel was 1.6% relative to the second catalyst-supporting support (nickel was contained in an amount of 26.6 mol% relative to 100 mol% of platinum).

### (7) Formation of Second Catalyst Layer

1.0 g of the second catalyst-supporting support was placed in a container, and pure water, ethanol, and 2-propanol were sequentially added at a mass ratio of 33:50:17 (2 g as a mixed solution). The thus-obtained liquid dispersion was subjected to dispersion using ultrasonic waves for 3 minutes. Next, glass balls with a diameter of 2 mm were placed in the container, and stirring was performed at 100 rpm for 30 minutes using a planetary ball mill (PM 200 available from Retsch). Furthermore, 5% Nafion (registered trademark) (274704-100MI, available from Sigma-Aldrich) was added to the liquid dispersion, and stirring was performed in the same manner as above using the ultrasonic dispersion and the planetary ball mill. The amount of Nafion added was adjusted such that the mass ratio of Nafion relative to the second support was 0.074.

The thus-obtained liquid dispersion was applied onto a polytetrafluoroethylene sheet using a bar coater, and the formed coating film was dried at 60°C.

### (8) Formation of Anode Electrode Catalyst Layer

1.00 g of platinum on carbon black (TEC10E50E) available from Tanaka Kikinzoku Kogyo K.K. was placed in a container, and pure water, ethanol, and 2-propanol were sequentially added at a mass ratio of 45:35:20 (12.8 g as a mixed solution). The thus-obtained liquid dispersion was subjected to dispersion using ultrasonic waves for 3 minutes. Next, yttrium-stabilized zirconia balls with a diameter of 10 mm were placed in the container, and stirring was performed at 800 rpm for 20 minutes using a planetary ball mill (ARE 310 available from Thinky Corporation). Furthermore, 5% Nafion (registered trademark) (274704-100MI, available from Sigma-Aldrich) was added to the liquid dispersion, and stirring was continuously performed in the same manner as above using the ultrasonic dispersion and the planetary ball mill. The amount of Nafion added was adjusted such that the mass ratio of Nafion relative to the platinum on carbon black was 0.70. The thus-obtained liquid dispersion was applied onto a polytetrafluoroethylene sheet using a bar coater, and the formed coating film was dried at 60°C.

### (9) Production of CCM

The first catalyst layer-attached polytetrafluoroethylene sheet and the anode electrode catalyst layer-attached polytetrafluoroethylene sheet were cut into 54 mm squares, superimposed on a Nafion (registered trademark) (NRE-211 available from Du-Pont) electrolyte membrane, and heat pressed in the atmosphere at 140°C and 20 kgf/cm² for 2 minutes to transfer the catalyst layers. Next, the polytetrafluoroethylene sheet was removed from the first catalyst layer-attached polytetrafluoroethylene sheet to expose the first catalyst layer, and thereafter the second catalyst layer-attached polytetrafluoroethylene sheet was superimposed on the first catalyst layer, and heat pressed in the atmosphere at 140°C and 20 kgf/cm² for 2 minutes to transfer the catalyst layer. In this way, a cathode catalyst layer including the first catalyst layer and the second catalyst layer was formed on one surface of the Nafion solid polymer electrolyte membrane, and an anode catalyst layer was formed on the other surface of the same.

### (10) Assembly of Solid Polymer Fuel Cell

A solid polymer fuel cell was assembled using the CCM obtained in the step (9). As the gas diffusion layer, SIGRACET (registered trademark) 29BC (available from SGL) was used.

### Example 2

A solid polymer fuel cell was obtained in the same manner as in Example 1, except that, in the step (4) Formation of First Catalyst Layer in Example 1, the first catalyst-supporting support in granulated form was pulverized by changing the ball diameter to 5 mm, the stirring time before addition of 5% Nafion to 90 minutes, and the stirring time after the addition of 5% Nafion to 60 minutes.

### Comparative Example 1

A solid polymer fuel cell was obtained in the same manner as in Example 1, except that the step (2) Granulation of First Metal Oxide in Example 1 was not performed.

### Comparative Example 2

A solid polymer fuel cell was obtained in the same manner as in Example 1, except that the step (9) in Example 1 was performed as described below.

The second catalyst layer-attached polytetrafluoroethylene sheet and the anode electrode catalyst layer-attached polytetrafluoroethylene sheet produced in Example 1 were cut into 54 mm squares, superimposed on a Nafion (registered trademark) (NRE-211 available from Du-Pont) electrolyte membrane, and heat pressed in the atmosphere at 140°C and 20 kgf/cm² for 2 minutes to transfer the catalyst layers. Next, the first catalyst layer-attached polytetrafluoroethylene sheet produced in Example 1 was superimposed on the second catalyst layer, and heat pressed in the atmosphere at 140°C and 20 kgf/cm² for 2 minutes to transfer the catalyst layer. In this way, a cathode catalyst layer including the second catalyst layer and the first catalyst layer in this order was formed on one surface of the Nafion solid polymer electrolyte membrane, and an anode catalyst layer was formed on the other surface of the same.

### Comparative Example 3

In this comparative example, a solid polymer fuel cell was obtained in the same manner as in Example 1, except that a layer formed in the same manner as the anode catalyst layer was used as a cathode catalyst layer. In short, the cathode catalyst layer contained a catalyst-supporting support made of platinum on carbon black.

### Evaluation 1

The particle size distributions of the catalyst-supporting supports of the first catalyst layer and the second catalyst layer obtained in each of Examples and Comparative Examples were measured using the method described below.

Liquids obtained by diluting the liquid dispersions used to form the first catalyst layer and the second catalyst layer with ethanol were used, and particle size distributions were measured using a laser diffraction/scattering particle size distribution measurement apparatus (LA-920 available from Horiba, Ltd.). The results of measurement are shown in Table 1.

### Evaluation 2

A cross section of each of the CCMs obtained in Examples and Comparative Examples was observed using an electron microscope, and the thicknesses of the first catalyst layer and the second catalyst layer in the cathode catalyst layer were measured. Also, pore size distributions based on a mercury intrusion method were measured based on the above-described method. For pore size distribution measurement, the first catalyst layer and the second catalyst layer each independently formed by heat pressing the first catalyst layer-attached polytetrafluoroethylene sheet obtained in the step (4) and the second catalyst layer-attached polytetrafluoroethylene sheet obtained in the step (7) described above in the atmosphere at 140°C and 20 kgf/cm² for 2 minutes were used. The results are shown in Table 1. Pore size distribution measurement was not performed for the CCM obtained in Comparative Example 3 because it had a single catalyst layer design.

### Evaluation 3

Cell resistance was measured for the first catalyst layer and the second catalyst layer obtained in each of Examples and Comparative Examples using the method described below. The results are shown in Table 2.

The amount of Pt applied to a polytetrafluoroethylene sheet was adjusted to 0.2 mg/cm² in order to exclude, from the factors that impart cell resistance in a low humidity state, factors other than the characteristics of the catalyst-supporting supports used in the catalyst layers.

Next, a unit cell for measuring cell resistance was produced in the manner described below using the sheet with the adjusted amount of Pt.

The first catalyst layer-attached polytetrafluoroethylene sheet and the anode electrode catalyst layer-attached polytetrafluoroethylene sheet were cut into 54 mm squares, superimposed on a Nafion (registered trademark) (NRE-211 available from Du-Pont) electrolyte membrane, and heat pressed in the atmosphere at 140°C and 20 kgf/cm² for 2 minutes to transfer the catalyst layers. A unit cell for measuring the cell resistance of the first catalyst layer was assembled using the thus-obtained CCM. As the gas diffusion layer, SIGRACET (registered trademark) 29BC (available from SGL) was used.

Also, a unit cell for measuring the cell resistance of the second catalyst layer was assembled in the same procedure as described above using the second catalyst layer-attached polytetrafluoroethylene sheet instead of the first catalyst layer-attached polytetrafluoroethylene sheet.

Each of the obtained unit cells was caused to generate power, and the cell resistance at 0.6 V during power generation was measured using a current-interrupt method. For the measurement, a 890e fuel cell electron load device available from Scribner Associates Inc. was used. The unit cell was caused to generate power in a high humidity state (at 80°C and 90% RH for both the cathode and the anode) and a low humidity state (at 80°C and 40% RH for both the cathode and the anode). As supply gases, hydrogen was supplied to the anode at a rate of 5 L/min, and air was supplied to the cathode at a rate of 25 L/min.

### Evaluation 4

Durability at high temperature was measured for the fuel cells obtained in Examples and Comparative Examples using the method described below. The results are shown in Table 2.

Each of the fuel cells was caused to generate power in a low humidity state (at 110°C and 30% RH for both the cathode and the anode) for 16 hours, and the surface area of the platinum catalyst in the electrode catalyst layer was measured before and after power generation using an ECSA. Then, the residual ratio (%) of platinum catalyst was calculated from (S_{F} - S_{A}) / S_{A} × 100. The obtained value was used as an indicator for durability at high temperature. S_{A} represents the surface area of platinum catalyst before power generation, and S_{F} represents the surface area of platinum catalyst after power generation.

### Evaluation 5

Unit cells for measuring cell resistance were assembled using the CCMs obtained in Examples and Comparative Examples. As the gas diffusion layer, SIGRACET (registered trademark) 29BC (available from SGL) was used.

Each of the obtained unit cells was subjected to power generation evaluation in a high humidity state (at 80°C and 90% RH for both the cathode and the anode) and a low humidity state (at 80°C and 40% RH for both the cathode and the anode). As the amounts of gases supplied to the anode and the cathode, hydrogen was supplied to the anode at a rate of 5 L/min, and air was supplied to the cathode at a rate of 25 L/min. Here, current density (A/cm²) at a voltage of 0.6 V was calculated. The calculation results are shown in Table 2.

**[Table 1]**

| | First catalyst layer | | | | | | Second catalyst layer | | | | |
|---|---|---|---|---|---|---|---|---|---|---|---|
| | Support | Catalyst | D₅₀ of catalyst-supporting support (µm) | Thickness t₁ (µm) | Pore size distribution | | Support | Catalyst | D₅₀ of catalyst-supporting support (µm) | Thickness t₂ (µm) | Pore size distribution |
| | | | | | Peak (µm) in range of 0.1 µm or more and 1 µm or less | Peak (µm) in range of 0.005 µm or more and less than 0.1 µm | | | | | Peak (µm) in range of 0.005 µm or more and 0.1 µm or less |
| Example 1 | Tin oxide | Platinum | 2.3 | 2.2 | 0.45 | 0.021 | Tin oxide | Platinum Nickel | 0.5 | 4.2 | 0.019 |
| Example 2 | Tin oxide | Platinum | 2.0 | 2.5 | 0.31 | 0.023 | Tin oxide | Platinum Nickel | 0.5 | 3.3 | 0.019 |
| Comparative Example 1 | Tin oxide | Platinum | 9.4 | 1.8 | No peak observed | 0.035 | Tin oxide | Platinum Nickel | 0.5 | 3.1 | 0.019 |
| Comparative Example 2 | Tin oxide | Platinum Nickel | 0.5 | 2.2 | No peak observed | 0.019 | Tin oxide | Platinum | 2.3 | 2.9 | 0.021 |
| Comparative Example 3 | Carbon black | Platinum | 0.6 | 4.4 | - | - | Only one catalyst layer | | | | |

**[Table 2]**

| | Temperature/humidity environment | Cell resistance (mΩ • cm²) | | Durability at 110°C • 30% RH (%) | Power generation performance (current density at 0.6 V (A/cm²)) |
|---|---|---|---|---|---|
| | | First catalyst layer | Second catalyst layer | | |
| Example 1 | 80°C • 90% RH | 69.2 | 78.4 | -2.1 | 1.71 |
| | 80°C • 40% RH | 177.1 | 206.5 | | 0.79 |
| Example 2 | 80°C • 90% RH | 66.2 | 78.4 | 0.6 | 1.50 |
| | 80°C • 40% RH | 190.0 | 206.5 | | 0.73 |
| Comparative Example 1 | 80°C • 90% RH | 67.5 | 78.4 | -6.9 | 1.26 |
| | 80°C • 40% RH | 208.0 | 206.5 | | 0.59 |
| Comparative Example 2 | 80°C • 90% RH | 78.4 | 69.2 | -5.6 | 1.25 |
| | 80°C • 40% RH | 206.5 | 177.1 | | 0.80 |
| Comparative Example 3 | 80°C • 90% RH | 51.7 | | -10.4 | 1.55 |
| | 80°C • 40% RH | 156.2 | | | 0.82 |

As is clear from the results shown in Table 2, it can be seen that the fuel cells obtained in Examples are superior in terms of durability in power generation in a high temperature and low humidity state. It can also be seen that the fuel cells obtained in Examples exhibit favorable power generation characteristics in both a low humidity state and a high humidity state.

### Industrial Applicability

The electrode catalyst layer for electrochemical cells of the present invention has durability and can cause electrochemical reactions to smoothly proceed in both a low humidity state and a high humidity state.

## Claims

1. An electrode catalyst layer for electrochemical cells, the electrode catalyst layer comprising:
a first catalyst layer that contains a first catalyst-supporting support in which a first catalytically active component is supported on a support, the support containing a first metal oxide; and
a second catalyst layer that contains a second catalyst-supporting support in which a second catalytically active component is supported on a support, the support containing a second metal oxide,
wherein the first catalyst layer has a cell resistance measured at 80°C and 40% RH using a current-interrupt method lower than that of the second catalyst layer, and
the electrode catalyst layer is used with the first catalyst layer being disposed on an electrolyte membrane side relative to the second catalyst layer.

2. An electrode catalyst layer for electrochemical cells, the electrode catalyst layer comprising:
a first catalyst layer that contains a first catalyst-supporting support in which a first catalytically active component is supported on a support, the support containing a first metal oxide; and
a second catalyst layer that contains a second catalyst-supporting support in which a second catalytically active component is supported on a support, the support containing a second metal oxide,
wherein the first catalyst-supporting support has a cumulative volume particle size D₅₀ at 50% cumulative volume obtained using a laser diffraction scattering particle size distribution measurement method larger than that of the second catalyst-supporting support,
in a pore size distribution measured based on a mercury intrusion method of the first catalyst layer, a peak is observed in a range of 0.005 µm or more and less than 0.1 µm, and also in a range of 0.1 µm or more and 1 µm or less,
in a pore size distribution measured based on a mercury intrusion method of the second catalyst layer, at least one peak is observed in a range of 0.005 µm or more and 0.1 µm or less, and
the electrode catalyst layer is used with the first catalyst layer being disposed on an electrolyte membrane side relative to the second catalyst layer.

3. The electrode catalyst layer according to claim 1 or 2,
wherein the first catalytically active component and the second catalytically active component each independently contain at least one element selected from the group consisting of platinum, palladium, ruthenium, and iridium.

4. The electrode catalyst layer according to claim 3,
wherein the catalytically active components further contain a transition metal.

5. The electrode catalyst layer according to claim 3,
wherein the first catalytically active component contained in the first catalyst layer is elemental platinum, and
the second catalytically active component contained in the second catalyst layer is a platinum-transition metal alloy.

6. The electrode catalyst layer according to any one of claims 1 to 5,
wherein the first metal oxide and the second metal oxide are each independently a tin oxide, a titanium oxide, or a zirconium oxide.

7. The electrode catalyst layer according to any one of claims 1 to 6,
wherein t₁/t₂ that is a ratio of thickness t₁ of the first catalyst layer relative to thickness t₂ of the second catalyst layer takes a value of 0.05 or more and 2 or less.

8. The electrode catalyst layer according to any one of claims 1 to 7,
wherein the first catalyst layer has a thickness t₁ of 0.2 µm or more and 10 µm or less, and
the second catalyst layer has a thickness t₂ of 0.5 µm or more and 15 µm or less.

9. A membrane electrode assembly for electrochemical cells, the membrane electrode assembly comprising:
a solid electrolyte membrane;
a catalyst layer that is disposed on a surface of the solid electrolyte membrane; and
a gas diffusion layer that is disposed on a surface of the catalyst layer,
wherein the catalyst layer is the electrode catalyst layer according to any one of claims 1 to 8.

10. An electrochemical cell comprising the membrane electrode assembly according to claim 9.

11. The electrochemical cell according to claim 10,
wherein the electrochemical cell is a solid polymer fuel cell.

12. The electrochemical cell according to claim 10,
wherein the electrochemical cell is a metal-air battery.

13. The electrochemical cell according to claim 10,
wherein the electrochemical cell is a water electrolysis apparatus.
